# EUROPÄISCHE PATENTSCHRIFT

(11) **EP 2 822 738 B1**
(45) Veröffentlichungstag und Bekanntmachung des Hinweises auf die Patenterteilung: **27.04.2016**
(21) Anmeldenummer: 13710281.0
(22) Anmeldetag: 06.03.2013
(51) Int. Cl.: F16J 13/10

(54) **SCHNELLVERSCHLUSS FÜR DRUCKBEHÄLTER**
QUICK-ACTING CLOSURE FOR PRESSURE VESSELS
FERMETURE RAPIDE POUR RÉCIPIENT À PRESSION

(30) Priorität: 09.03.2012 CH 338122012
(43) Veröffentlichungstag der Anmeldung: 14.01.2015
(73) Patentinhaber: Simson Innovation, 8405 Winterthur (CH)
(72) Erfinder: SIMSON, Dionizy, CH-8405 Winterthur (CH)
(74) Vertreter: Frei Patent Attorneys
(86) Internationale Anmeldenummer: PCT/CH2013/000036
(87) Internationale Veröffentlichungsnummer: WO 2013/131200

(56) Entgegenhaltungen:
- WO-A1-99/27280
- WO-A1-02/097319
- DE-A1- 1 442 816
- DE-A1- 3 932 225
- DE-U1- 20 309 300
- US-A- 3 279 269
- US-A- 3 998 245
- US-A1- 2009 084 791

## Beschreibung

Die Erfindung bezieht sich auf eine Schnellverbindungsanordnung für einen unter Druck stehenden Hohlkörper gemäss dem Oberbegriff des Anspruchs 1. Ferner betrifft die Erfindung auch ein Kraftübertragungselement gemäss dem Oberbegriff des Anspruchs 15.

An eine Schnellverbindungsanordnung für Druckbehälter, welche in der Regel als Verschlusssystem ausgebildet ist, werden hohe Anforderungen gestellt. Zum Einen stellen die im Druckbehälter vorherrschenden Druckkräfte eine grosse Belastung für ein solches Verschlusssystem dar. Die Bauteile müssen daher entsprechend ausgelegt werden. Zum Anderen muss ein Versagen des Verschlusssystems unter allen Umständen ausgeschlossen werden, da dies ansonsten schwerwiegende Konsequenzen haben kann. Daher muss das Verschlusssystem konstruktiv auch so ausgelegt sein, dass ein Versagen desselbigen praktisch ausgeschlossen werden kann.

Bekannte Verschlusssysteme, welche die obigen Anforderungen erfüllen, sind daher häufig umständlich ausgeführt und schwerfällig in der Bedienung. Diese Verschlusssysteme sind daher in der Regel nicht nur teuer in der Herstellung, sondern auch zeitintensiv in der Bedienung. Schnelle Öffnungs- und Schliessvorgänge sind mit diesen Systemen nicht möglich.

So ist zum Beispiel ein Verschlusssystem zum Verschliessen eines Druckbehälters mittels eines Deckels bekannt, bei welchem an Deckel und Druckbehälter angebrachte, ringförmige Flansche mittels herkömmlichen Schrauben oder Bügelschrauben kraftschlüssig miteinander verbunden werden. Dieses Verschlusssystem ist geeignet, einen Druckbehälter sicher zu verschliessen. Das Schliessen und Öffnen des Druckbehälters benötigt jedoch einen erheblichen Zeitaufwand, müssen doch eine Mehrzahl von Schrauben manuell festgezogen bzw. gelöst werden. Ferner ist eine Automatisierung des Schliess- und Öffnungvorganges kaum umsetzbar. Es ist überdies auch nicht visuell erkennbar, ob sämtliche Schrauben richtig angezogen sind.

Es ist im Weiteren auch ein Verschlusssystem mit Bajonettverschluss bekannt. Deckel und Druckbehälter weisen auch hier ringförmige Flansche auf. Der eine Flansch enthält Aussparungen am Umfang. Der andere Flansch ist als Gegenflansch ausgebildet und enthält Vorsprünge, die in die Aussparungen eingeführt werden und darin geführt sind. Durch gegenläufiges Verdrehen von Deckel und Druckbehälter werden die Vorsprünge in den Aussparungen in eine Arretierposition geführt. Dieses Verschlusssystem zeichnet sich durch seine vergleichsweise einfache und schnelle Bedienbarkeit sowie hohe Sicherheit aus. Als nachteilig haben sich jedoch die hohen Herstellungskosten erwiesen. So müssen beispielsweise die Aussparungen in aufwändigen Arbeitsschritten in den dazugehörigen Flansch eingearbeitet werden.

Ein weiterer Nachteil dieses Verschlusssystems liegt darin, dass der Deckel nicht nur auf den Druckbehälter aufgesetzt sondern auch gegen diesen um eine Rotationsachse verdreht werden muss. Dies erschwert insbesondere bei grösseren Deckeln die Handhabung des Verschlusses. Eine Automatisierung des Schliess- und Üffnungsvorganges erfordert zudem aufwendige Mittel.

Im weiteren weist dieses Verschlusssystem auch den Nachteil auf, dass von aussen kaum ersichtlich ist, ob das System korrekt verriegelt ist. Das korrekte Verschliessen des Druckbehälters muss jedoch von aussen überprüfbar sein, da von einem nicht korrekt verschlossenen Druckbehälter eine hohe Unfallgefahr ausgeht. Daher müssen zusätzliche Mittel vorgesehen sein, welche zuverlässig die korrekte Verriegelung des Bajonettverschlusses anzeigen.

Ferner ist auch ein Verschlusssystem für das schnelle Öffnen und Schliessen von Druckbehältern bekannt, welches ein Kraftübertragungselement in Form eines radial elastischen, offenen Ringelements umfasst, das in eine Nut am Flansch eines Verschlussdeckels eingelegt ist. Der Flansch des Druckbehälters weist einen zur Nut hin gerichteten Vorsprung auf. Im geschlossenen Zustand übergreift der Flansch des Deckels den Flansch des Druckbehälters. Zum Öffnen des nicht mehr unter Überdruck stehenden Druckbehälters ist das elastische Ringelement vollständig in der Nut angeordnet, so dass sich der Deckel vom Druckbehälter abheben lässt. Im verriegelten Zustand, wenn der Druckbehälter unter Überdruck steht, ist das Ringelement teilweise aus der Nut heraus geschoben und mit einer ersten Auflagefläche am Vorsprung und mit einer zweiten gegenüberliegenden Auflagefläche an einer Schulter in der Nut abgestützt.

Die durch den Innendruck erzeugten Kräfte werden vom Flansch des Druckbehälters über den Vorsprung auf den elastischen Ring und von diesem weiter auf die Schulter der ringförmigen Nut im Flansch des Behälterdeckels übertragen.

Die auf das elastische Ringelement wirkenden Kräfte sind nicht kollinear, sondern wirken versetzt. Das dadurch entstehende Moment führt dazu, dass der elastische Ring axial kippt. Durch das Kippen werden jedoch die kraftübertragenden Flächen ungleichmässig belastet und entsprechend deformiert. Um einer solchen Deformation vorzubeugen muss der Ring entsprechend gross dimensioniert werden. Dies hat zur Folge, dass die Abmessungen des Verschlusses übermässig gross werden und sich die radiale Elastizität des Ringelementes verringert. Behälter mit kleinerem Durchmesser können daher nicht mit diesem Verschlusssystem ausgerüstet werden. So offenbart beispielsweise die DE-A-39 32 225 ein solches Verschlusssystem.

Die gattunsgemässe EP-B-1 032 782 macht sich das oben erläuterte Kippen des Ringelements für das Absichern gegen ein ungewolltes Öffnen des Verschlusses unter Druck zu Nutze. Hierzu ist vorgesehen, dass sich das Ringelement beim Kippen an einem Absatz in der Nut verhakt, so dass sich das Ringelement zum Öffnen des Verschlusses nicht vollständig in die Nut zurückschieben lässt. Das Ringelement bleibt nun verhakt so lange der Behälter unter Druck steht.

Das Ringelement muss jedoch auch hier einen Mindestdurchmesser aufweisen, damit sich dieses ohne bleibende Deformation unter Druck kippen lässt. Ferner weist das Ringelement zwar eine vergleichsweise geringe Höhe auf, dafür ist seine radiale Breite vergleichsweise gross. Somit findet auch diese Ausführungsform eines Verschlusssystems nur für grössere Druckbehälter Anwendung.

Es ist deshalb Aufgabe der Erfindung, eine Schnellverbindungsanordnung zu schaffen, welche den Kräftefluss über das Kraftübertragungselement vereinfacht, ein Kippen des Kraftübertragungselement auch unter Druckbelastung verhindert, sowie das Verbindungssystem bereits bei relativ kleinem Überdruck im Druckbehälter gegen ein unbeabsichtigtes Öffnen sichert. Ferner soll die Schnellverbindungsanordnung auch in vergleichsweise kleinen Abmessungen ausführbar und z. B. auch für Druckbehälter mit vergleichsweise kleinen Dimensionen Anwendung finden. Die Schnellverbindungsanordnung soll ferner einfach in der Handhabung sowie mit einfachen Mitteln und möglichst geringem Material- und Kosteneinsatz herstellbar sein.

Diese Aufgabe wird durch die Merkmale der Ansprüche 1 und 15 gelöst. Weitere bevorzugte Ausführungsformen und Weiterbildungen der Erfindung gehen aus den abhängigen Patentansprüchen hervor.

Die erfindungsgemässe Schnellverbindungsanordnung enthält also einen ersten Verbindungskörper mit einem Umfassungsabschnitt sowie einen zweiten Verbindungskörper mit einem Eingriffabschnitt. Der erste Verbindungskörper wird mit seinem Umfassungsabschnitt bei der Herstellung der Verbindung entlang einer Verbindungsachse wenigstens teilweise über den Eingriffabschnitt des zweiten Verbindungskörpers geschoben. Aus einer anderen Betrachtungsweise greift der Eingriffabschnitt in den Umfassungsabschnitt ein.

Wenigstens einer der Verbindungskörper ist nun vorzugsweise als Hohlkörper ausgebildet. Der Hohlkörper entspricht insbesondere einem Druckbehälter. Ferner ist ein Verbindungskörper vorzugsweise als Verschlussdeckel ausgebildet, welcher den anderen als Hohlkörper, insbesondere als Druckbehälter, ausgebildeten Verbindungskörper verschliesst. Der als Verschlussdeckel ausgebildete Verbindungskörper kann jedoch ebenfalls als Hohlkörper ausgebildet sein.

Gemäss einer ersten Ausführungsform der Erfindung ist nun der erste Verbindungskörper ein Verschlussdeckel und der zweite Verbindungskörper ein Hohlkörper, insbesondere ein Druckbehälter.

Gemäss einer zweiten Ausführungsform ist der erste Verbindungskörper ein Hohlkörper, insbesondere ein Druckbehälter, und der zweite Verbindungskörper ein Verschlussdeckel.

Die Verbindungsachse definiert die geometrische Achse entlang welcher der erste und zweite Verbindungskörper zwecks Herstellung bzw. Lösen der Verbindung zusammengeführt bzw. voneinander separiert werden.

Der Umfassungsabschnitt und/oder der Eingriffabschnitt ist beispielsweise eine in Richtung der Verbindungsachse, insbesondere parallel zur Verbindungsachse, orientierte ringförmige Anformung. Die ringförmige Anformung kann vollumfänglich, z. B. als Umfassungsring, oder aus mehreren, teilumfänglich nebeneinander angeordneten Umfassungssegmenten ausgebildet sein. Die Ringform kann die Form eines Kreises oder einer Ellipse annehmen. Das heisst, die zu verschliessende Öffnung kann kreis- oder ellipsenförmig sein.

Der Umfassungsabschnitt und/oder der Eingriffabschnitt ist bevorzugt ein hohlzylinderförmiger Endabschnitt. Der Hohlzylinderabschnitt definiert bevorzugt eine Kreisform.

Der Eingriffabschnitt kann jedoch auch durch eine umfänglich runde, zentrale Erhebung im Verbindungskörper ausgebildet sein, welche zu einem radial umlaufenden Körperabschnitt einen Absatz ausbildet. In diesem Fall stellt der Verbindungskörper einen Verschlussdeckel dar.

Der durch den Innenumfang des Umfassungsabschnittes umrissene Hohlraum ist bevorzugt gegengleich zum Aussenumfang des Eingriffabschnittes ausgebildet.

Die Schnellverbindungsanordnung enthält ferner ein Kraftübertragungselement. Das Kraftübertragungselement besteht zweckmässig aus einem, bevorzugt einstückig gefertigten, offenen Ring. Dieser ist ferner bevorzugt elastisch ausgebildet. Der offene Ring zeichnet sich durch zwei Ringendabschnitte aus, welche im entspannten Zustand des Ringes einen Ringspalt ausbilden. Das Kraflübertragungselement lässt sich nun durch das aufeinander zu oder voneinander Wegführen der Ringendabschnitte elastisch verformen. Durch die elastische Verformung wird der Ringspalt entweder verkleinert bzw. geschlossen bzw. vergrössert. Der Durchmesser des Kraftübertragungselements ändert sich dabei, wodurch das Kraftübertragungselement im Verbindungszustand je nach Anordnung in die Nut zurückverschoben oder aus dieser herausgeschoben wird.

Gemäss einer ersten Ausführungsvariante der Erfindung ist nun innenseitig am Umfassungsabschnitt eine radial umlaufende Nut und aussenseitig am Eingriffabschnitt ein radial umlaufender Vorsprung angeordnet.

Gemäss einer zweiten Ausführungsvariante der Erfindung ist innenseitig am Umfassungsabschnitt ein radial umlaufender Vorsprung und aussenseitig am Eingriffabschnitt eine radial umlaufenden Nut angeordnet.

Nut und Vorsprung sind im Zustand der Verbindung jeweils gegeneinander gerichtet.

Der Vorsprung bildet eine Anschlagschulter mit einer schrägen Anschlagfläche aus. An den Vorsprung schliesst eine entsprechend zurückversetzte, in Richtung der Verbindungsachse ausgerichtete Führungsfläche für das Kraftübertragungselement an. Die Führungsfläche ist bevorzugt parallel zur Verbindungsachse ausgebildet. Die Führungsfläche ist bevorzugt zylinderförmig.

In der Offenstellung der Verbindungsanordnung ist nun das Kraftübertragungselement radial wenigstens teilweise, vorzugsweise vollständig in die umlaufende Nut eingeschoben. So kann das Kraftübertragungselement in der Offenstellung radial teilweise aus der Nut hervorstehen.

Das Kraftübertragungselement liegt in der Offenstellung bevorzugt in gespanntem Zustand in der Nut. Hierzu werden die Ringendabschnitte des Kraftübertragungselement, je nach Anordnung der Nut am Umfassungsabschnitt oder am Eingriffabschnitt, unter Aufbau einer Spannung bevorzugt auseinander geführt oder zueinander hin geführt. Dadurch wird gewährleistet, dass zum Öffnen und zum Offenhalten der Verbindungsanordnung eine permanente Kraft auf das Kraftübertragungselement ausgeübt werden muss. Diese Öffnungs- bzw. Offenhaltekraft dient als zusätzliche Sicherung gegen ein ungewolltes Öffnen der Verbindungsanordnung.

Es kann jedoch gemäss einer alternativen Ausführungsform auch vorgesehen sein, dass das Kraftübertragungselement in der Offenstellung in teilweise oder vollständig entspanntem Zustand vorliegt.

Zur Erstellung der Verbindung zwischen den beiden Verbindungskörpern ist das Kraftübertragungselement teilweise aus der Nut herausführbar. Liegt das Kraftübertragungselement in seinem gespannten Zustand der Offenstellung nicht vollständig in der Nut, so wird dieses, je nach Anordnung der Nut am Umfassungsabschnitt oder am Eingriffabschnitt, beim Zusammenführen der Verbindungskörper durch Spreizen oder Zusammenziehen der Ringendabschnitte zuerst vollständig in die Nut geschoben bevor dieses dann zur Herstellung der Verbindung wieder teilweise radial aus der Nut herausgeführt wird.

Das Kraftübertragungselement legt sich beim Schliessen mit einer Grundseite, welche entlang der Verbindungsachse ausgerichtet ist, bevorzugt an die genannte Führungsfläche an. Die Führungsfläche zentriert hierbei das Kraftübertragungselement.

Gemäss der bevorzugten Ausführungsform liegt nun das Kraftübertragungselement in Schliessstellung in einem wenigstens teilweisen, bevorzugt in einem vollständig entspannten Zustand vor. Hierzu werden die Ringendabschnitte des Kraftübertragungselements beim Schliessvorgang, je nach Anordnung der Nut am Umfassungsabschnitt oder am Eingriffäbschnitt, durch Entspannen zueinander hin geführt oder auseinander geführt.

Gemäss dieser Ausführungsform und mit einer am Umfassungsabschnitt angeordneten Nut, entspricht der Innendurchmesser des (entspannten) Kraftübertragungselements bevorzugt dem Durchmesser der ring- bzw. zylinderförmigen Führungsfläche am Eingriffabschnitt. Das Kraftübertragungselement wird auf diese Weise an der Führungsfläche zentriert. Die beiden genannten Durchmesser bilden folglich den Nenndurchmesser der Verbindungsanordnung aus.

Gemäss der alternativen Ausführungsform liegt das Kraftübertragungselement in der Schliessstellung in gespanntem Zustand vor. Hierzu werden die Ringendabschnitte, je nach Anordnung der Nut am Umfassungsabschnitt oder am Eingriffabschnitt, des Kraftübertragungselements beim Schliessvorgang zusammengezogen oder gespreizt.

Das Kraftübertragungselement enthält nun eine erste schräge Auflagefläche sowie eine der ersten Auflagefläche gegenüber liegende zweite schräge Auflagefläche. Die erste Auflagefläche ist in Anschlag mit der Anschlagfläche des Vorsprungs bringbar. Die zweite Auflagefläche ist in Anschlag mit der Anschlagfläche einer Anschlagschulter an der Nut bringbar. Diese Anschlagschulter liegt im Zustand der Verbindung dem Vorsprung am Eingriffabschnitt radial versetzt gegenüber.

Wird der als Hohlkörper ausgebildete Verbindungskörper nun einem Überdruck ausgesetzt, so verschieben sich die beiden Verbindungskörper parallel zur Verbindungsachse relativ zueinander. Das Kraftübertragungselement, welches mit seiner zweiten Auflagefläche der Anschlagfläche an der Nut anliegt, wird bei diesem Vorgang mit seiner ersten Auflagefläche an die Anschlagfläche der Anschlagschulter in Anschlag geführt. Das Kraftübertragungselement wird bei diesem Vorgang entlang der Führungsfläche geführt und auf diese Weise mit dem radial umlaufenden Vorsprung in Eingriff gebracht. Letztendlich ist das Kraftübertragungselement mit seinen beiden Auflageflächen zwischen der Anschlagfläche der Nut und der Anschlagfläche des Vorsprungs axial fixiert. Eine weitere axiale Verschiebung der Verbindungskörper ist nicht mehr möglich. Das Kraftübertragungselement ist in dieser Position, wie weiter unten noch näher erläutert, auch radial fixiert, so dass dieses dem Druck auch nicht radial ausweichen kann. Ferner kann das Kraftübertragungselement durch die Keilwirkung unter Druckbelastung auch nicht unbeabsichtigt mittels der Betätigungsvorrichtung in die Nut verschoben und dadurch der Verschluss geöffnet werden. Die hierzu notwendigen radialen Verschiebekräfte lassen sich über die Betätigungsvorrichtung nicht aufbringen.

Das Kraftübertragungselement wird bereits bei einem geringen Überdruck, z.B. im Bereich von einigen Millibar, an die schräge Anschlagfläche des Vorsprungs angeschlagen.

Die beiden schrägen Auflageflächen des Kraftübertragungselements schliessen einen Winkel ein und konvergieren in Richtung der radial umlaufenden Nut, d.h. sie laufen aufeinander zu. Dies bedingt, dass die erste und/oder die zweite Auflagerfläche gegenüber einer Ebene die Senkrecht zur Verbindungsachse steht geneigt verläuft.

Der kleinste Winkel sollte nicht kleiner als der selbsthemmende Winkel bei Reibung sein. Dieser kleinste Winkel beträgt bei Stahl auf Stahl rund 7° (Winkelgrade). Der grösste Winkel ist durch das Entstehen einer normalen Kraftkomponente beeinflusst. Diese sollte nicht mit Biegemomenten die Spitze des Vorsprungs unnötig belasten.

Die Anschlagfläche der Anschlagschulter des umlaufenden Vorsprungs schliesst mit einer Ebene senkrecht zur Verbindungsachse daher bevorzugt einen spitzen Winkel ein. Dieser Winkel kann z. B. 7° (Winkelgrade) oder grösser sein. Ferner ist der Winkel bevorzugt 20° oder kleiner, insbesondere 15° oder kleiner.

Die Anschlagfläche der umlaufenden Nut schliesst mit einer Ebene senkrecht zur Verbindungsachse bevorzugt einen spitzen Winkel ein. Dieser Winkel kann z. B. 7° (Winkelgrade) oder grösser sein. Ferner ist der Winkel bevorzugt 20° oder kleiner, insbesondere 15° oder kleiner. Die beiden vorgenannten Winkel sind besonders bevorzugt identisch.

Die erste geneigte Auflagefläche des Kraftübertragungselements schliesst mit einer Ebene senkrecht zur Verbindungsachse ebenfalls bevorzugt einen spitzen Winkel ein. Dieser Winkel kann z. B. 7° (Winkelgrade) oder grösser sein. Ferner ist der Winkel bevorzugt 20° oder kleiner, insbesondere 15° oder kleiner. Die genannten Winkel der miteinander kooperierenden Anschlagfläche des Vorsprungs und der ersten Auflagefläche des Kraftübertragungselements sind besonders bevorzugt identisch.

Die zweite Auflagefläche des Kraftübertragungselements schliesst zu einer Ebene senkrecht zur Verbindungsachse ebenfalls bevorzugt einen spitzen Winkel ein. Dieser Winkel kann z. B. 7° (Winkelgrade) oder grösser sein. Ferner ist der Winkel bevorzugt 20° oder kleiner, insbesondere 15° oder kleiner. Die genannten Winkel der miteinander kooperierenden Anschlagfläche der Nut und der zweiten Auflagefläche des Kraftübertragungselements sind besonders bevorzugt identisch.

Die Erfindung betrifft ferner auch ein Kraftübertragungselement gemäss Anspruch 15 für die Verwendung in einer erfindungsgemässen Schnellverbindungsanordnung.

Die Querschnittsgeometrie des Kraftübertragungselementes sowie die umlaufende Nut und der umlaufende Vorsprung sind so ausgebildet und relativ zueinander angeordnet, dass das Kraftübertragungselement unter der Wirkung versetzt wirkender Kräfte im Verbindungszustand nicht kippen kann. Durch die erfindungsgemässe Ausbildung der genannten Bauteile wirken die Kräfte auf vergleichsweise grosse, definierte Flächen und belasten den Federring ausschliesslich mit Scherspannungen unter Ausschluss jeglicher Biegemomente. Dadurch kann der Querschnitt des Kraftübertragungselementes und somit auch des Deckels bzw. des Umfassungs- bzw. Eingriffabschnittes vergleichsweise klein gehalten werden. Trotzdem nimmt die erfindungsgemässe Verbindungsanordnung hohe Druckbelastungen auf.

Das Kraftübertragungselement zeichnet sich nun insbesondere durch eine Trapezform im Querschnitt aus, mit:
- einer ersten, kürzeren, die Aussenseite ausbildende Grundseite, welche eine erste Hochseite definiert;
- einer zweiten, längeren, die Innenseite ausbildende Grundseite, welche eine zweite Hochseite definiert und vorzugsweise zur ersten Grundseite parallel verläuft;
- einen ersten Trapezschenkel, welcher die erste Auflagefläche definiert;
- einen zweiten Trapezschenkel, welcher die zweite Auflagefläche definiert.

Die beiden einander gegenüber liegenden Auflageflächen entsprechen also den beiden Trapezschenkeln. Die der Nut zugewandte Hochseite entspricht dabei in der Verbindungsanordnung der kürzeren Grundseite. Die der kürzeren Grundseite gegenüber liegende Hochseite entspricht der längeren Grundseite, welche der Führungsfläche gegenüber liegt. Die beiden Grundseiten verlaufen bevorzugt parallel zueinander. Die Grundseiten werden Hochseiten genannt, weil diese bevorzugt in Richtung der Verbindungsachse ausgerichtet sind bzw. bevorzugt parallel zur Verbindungsachse verlaufen.

Die beiden Trapezschenkel verbinden die beiden Grundseiten miteinander. Die beiden Trapezschenkel schliessen mit der zweiten Hochseite jeweils einen Winkel von kleiner 90°, insbesondere zwischen 45° und 85° ein. Die besagte Querschnittsform entspricht bevorzugt einem gleichschenkligen Trapez.

Das Kraftübertragungselement weist eine senkrecht zur Verbindungsachse bzw. in radialer Richtung gemessene, grösste Breitenausdehnung auf, welche kleiner ist als die kleinste, parallel zur Verbindungsachse bzw. senkrecht zur Breitenausdehnung gemessene Höhenausdehnung. Das Kraftübertragungselement ist also bezüglich der radialen Ausrichtung hochkant ausgebildet.

Gemäss Anspruch 15 ist das als offener Ring ausgebildete Kraftübertragungselement mehrstückig ausgebildet und aus einer Mehrzahl, wie zwei oder drei, Ringabschnitten gebildet. Die Ringabschnitte sind elastisch ausgebildet. Die Ringabschnitte, auch Ringsegmente genannt, können starr, z. B. mittels Schweissen, Schrauben, Nieten, oder gelenkig bzw. elastisch miteinander verbunden sein. Zur Herstellung der Verbindung liegt das mehrteilige Kraftübertragungselement bevorzugt bereits zusammengesetzt, d.h. in einem Teil, vor. Der mehrteilige Aufbau des Kraftübertragungselements ist insbesondere bei grossen Dimensionen der Verbindungsanordnung von Vorteil, da es sehr aufwendig wäre, das Kraftübertragungselement in grosser Dimension, d.h. mit grossem Umfang einstückig herzustellen.

Gemäss der weiteren Ausführungsvariante gemäss Anspruch 15 ist das Kraftübertragungselement mehrteilig, insbesondere aus zwei, drei oder mehr als drei, zu einem Ring zusammensetzbaren Ringabschnitten aufgebaut. Im Gegensatz zur oben genannten mehrteiligen Ausführung des Kraftübertragungselements wird gemäss dieser Ausführungsform das Kraftübertragungselement erst bei der Herstellung der Verbindung aus den Ringabschnitten zusammengesetzt. Zwei benachbarte Ringabschnitte bilden jeweils einen Ringspalt aus und werden durch eine Betätigungsrichtung zusammengehalten, wie sie nachfolgend noch beschrieben wird.

Die Betätigungsvorrichtung zum Betätigen einer erfindungsgemässen Schnellverbindungsanordnung zeichnet sich durch ein erstes und zweites Führungsglied sowie durch ein Schliesselement aus, welches an einem der Verbindungskörper beweglich angebracht ist. Das Schliesselement weist jeweils eine Kulissenführung für das erste und zweite Führungsglied auf. Die Kulissenführung kann eine Führungsbahn für das jeweilige Führungsglied definieren. Die Kulissenführungen sind in einer gemeinsamen Führungsebene angeordnet.

Das erste Führungsglied ist mit einem ersten Ringendabschnitt des Kraftübertragungselements und das zweite Führungsglied mit einem zweiten Ringendabschnitt des Kraftübertragungselements verbunden. Die beiden Ringendabschnitte schliessen dabei je nach Stellung einen Ringspalt ein.

Das Schliesselement ist nun parallel zur Führungsebene linear verschiebbar am Verbindungskörper gelagert, und zwar derart, dass die beiden Führungsglieder in der Kulissenführung von einer Offenstellung, in welcher das Kraftübertragungselement in die Nut zurückgeschoben ist, in eine Schliessstellung, in welcher das Kraftübertragungselement radial aus der Nut hervortritt, und umgekehrt führbar sind. Das Schliesselement kann daher auch als Schieberelement bezeichnet werden.

Die beiden Führungsglieder können zum Beispiel als Führungszapfen ausgebildet sein.

Die Kulissenführung hat zum Zweck die beiden Führungsglieder zusammen oder auseinander zu führen. Der erste Vorgang bewirkt das Zusammenführen bzw. Zusammenziehen der besagten Ringendabschnitte des Kraftübertragungselementes und somit das Verkleinern bzw. Schliessen des Ringspaltes. Der zweite Vorgang bewirkt das Auseinanderführen bzw. Spreizen der besagten Ringendabschnitte und somit das Vergrössern des Ringspaltes.

Ist die umlaufende Nut innenseitig am Umfassungsabschnitt angeordnet, so bewirkt der erste Vorgang das Herausschieben des Kraftübertragungselementes aus der Nut und somit das Schliessen der Verbindung und der zweite Vorgang das Hineinschieben des Kraftübertragungselementes in die Nut und somit das Öffnen der Verbindung.

Ist die umlaufende Nut jedoch aussenseitig am Eingriffabschnitt angeordnet, so bewirkt der erste Vorgang das Hineinschieben des Kraftübertragungselementes in die Nut und somit das Öffnen der Verbindung und der zweite Vorgang das Hinausschieben des Kraftübertragungselementes aus der Nut und somit das Schliessen der Verbindung.

Die Betätigungsvorrichtung enthält bevorzugt wenigstens ein Längsführungselement, welches am selben Verbindungskörper wie das Schliesselement angebracht ist. Das heisst, das Schliesselement ist wenigstens über das Längsführungselement am Verbindungskörper angebracht. Das Schliesselement ist entlang dem Längsführungselement parallel zur Führungsebene linear verschiebbar. Damit sich das Schliesselement nicht verkanten kann, weist die Betätigungsvorrichtung bevorzugt zwei nebeneinander angeordnete, parallel zueinander ausgerichtete Längsführungselemente auf. Das Längsführungselement kann z. B. ein Führungsstab bzw. Führungsstift sein.

Die Betätigungsvorrichtung weist ferner eine Arretiereinrichtung zum Arretieren des Schliesselementes in der Offen- und/oder Schliessposition auf.

Gemäss einer bevorzugten Ausführungsform der Erfindung ist hierzu am Längsführungselement wenigstens eine seitliche Vertiefung bzw. Einbuchtung vorgesehen, welche als Einrastposition für ein Sicherungsrnittel dient. Die Vertiefung kann z. B. eine örtlich begrenzte Querschnittsverengung am Längsführungselement sein. Das Sicherungsmittel umfasst beispielsweise ein Einrastelement bzw. Riegelelement, welches in der Lage ist, in die Vertiefung bzw. Einbuchtung am Längsführungselement einzurasten und das Schliesselement auf diese Weise gegen eine weitere Verschiebung zu verriegeln. Das Sicherungsmittel ist mit dem Schliesselement verbunden und wird entsprechend mit diesem verschoben.

Das Einrastelement ist bevorzugt mit einem als Bestandteil des Sicherungsmittels ausgebildeten Rückstellelement in Wirkverbindung, welches dieses in Richtung Vertiefung bzw. Einbuchtung drückt. Das Rückstellelement ist z. B. eine Schraubenfeder. Die Arretiereinrichtung enthält ferner ein Betätigungsmittel, z. B. einen Druckknopf, mittels welchem das Einrastelement unter Druckbeaufschlagung entgegen der Rückstellkraft des Rückstellelementes aus der Vertiefung bzw. Einbuchtung angehoben werden kann. Das Schliesselement ist erst entlang des Längsführungselementes verschiebbar, wenn das Einrastelement vollständig aus der Vertiefung bzw. Einbuchtung angehoben ist. Sobald die Druckbeaufschlagung des Betätigungsmittels beendet wird, schiebt bzw. drückt das Rückstellinittel das Einrastmittel an das Längselement. Fluchtet das Rückstellmittel mit der Vertiefung bzw. Einbuchtung, so wird das Einrastmittel in diese hinein gestossen.

Das Längselement enthält über seine Längserstreckung bevorzugt zwei voneinander beabstandete Vertiefungen bzw. Einbuchtungen. Eine erste Vertiefung bzw. Einbuchtung definiert die Einrastposition für die Offenstellung und eine zweite Vertiefung bzw. Einbuchtung definiert die Einrastposition für die Schliessstellung. Die beiden Einrastpositionen definieren bevorzugt Endlagen der Führungsglieder entlang ihrer Kulissenführung.

Enthält die Betätigungsvorrichtung zwei Längsführungselemente, so ist beiden Längsführungselemente eine Arretiereinrichtung wie oben beschrieben zugeordnet. Die beiden Längsführungselemente sind wie oben beschrieben jeweils mit wenigstens einer, vorzugsweise mit zwei Vertiefungen bzw. Einbuchtungen ausgebildet. Diese fluchten bevorzugt miteinander. Die beiden Betätigungsmittel für die beiden Längsführungselemente liegen einander bevorzugt gegenüber.

Das Betätigungsmittel kann manuell oder durch eine Bewegungseinrichtung mit Steuerung automatisiert betätigbar sein. So lässt sich die erfindungsgemässe Betätigungsvorrichtung bevorzugt mit einer Hand, insbesondere mit lediglich zwei Fingern bedienen, indem die Betätigungsmittel gegeneinander gedrückt werden.

Die genannte Bewegungseinrichtung kann z. B. einen pneumatischen Antrieb mit einem Pneumatikzylinder, einen hydraulischen Antrieb mit Hydraulikzylinder oder einen elektrischen Linearantrieb umfassen. Hierzu können Elektromagnete, Spindelmotoren oder ähnliche Bauteile Einsatz finden.

Das Schliesselement kann am ersten oder zweiten Verbindungskörper angebracht sein. Das Schliesselement ist bevorzugt an jenem Verbindungskörper angeordnet, welcher die umlaufende Nut ausbildet.

Ist die Nut am Umfassungsabschnitt angeordnet, so ist das Schliesselement bevorzugt derart am dazugehörigen Verbindungskörper, insbesondere aussen an dessen Umfassungsabschnitt, angeordnet, dass dessen Führungsebene in Richtung Verbindungsachse gerichtet ist und insbesondere parallel zur Verbindungsachse verläuft.

Ist die Nut am Eingriffabschnitt angeordnet, so ist das Schliesselement bevorzugt derart am dazugehörigen Verbindungskörper angeordnet, dass dessen Führungsebene quer, und insbesondere senkrecht zur Verbindungsachse verläuft. Der Verbindungskörper, bei welchem die Nut an seinem Eingriffabschnitt angeordnet ist, entspricht bevorzugt einem Verschlussdeckel. Das Schliesselement ist in diesem Fall bevorzugt auf einem Deckelelement des Verschlussdeckels angeordnet.

Die Schnellverbindungsanordnung kann über eine oder mehrere Dichtungen, insbesondere Ringdichtungen, welche zwischen dem Umfassungs- und Eingriffabschnitt der beiden Verbindungskörper angeordnet sind, abgedichtet sein. Die Ringdichtungen können entlang der Verbindungsachse betrachtet auf einer oder beiden Seiten des Kraftübertragungselementes angeordnet sein.

Die Bauteile der Verbindungsanordnung, wie erster und zweiter Verbindungskörper oder das Kraftübertragungselement, können aus Metall, insbesondere Stahl gefertigt sein. Die Werkstoffe für jene Bauteile, welche mit einem Medium im Druckbehälter in Berührung kommen, sind durch den jeweiligen Anwendungsfall bestimmt. Der Werkstoff kann einfacher Flussstahl oder eine rost- und/oder säurebeständige Stahllegierung umfassen. Das Medium kann z. B. gasförmig oder flüssig sein.

Auch jene Bauteile, welche nicht mit dem Medium im Druckbehälter in Berührung gelangen, wie z. B. das Schliesselement, können aus Metall, wie z. B. Stahl, gefertigt sein. Für Teile der Betätigungsvorrichtung ist auch ein Werkstoff aus Aluminium denkbar. Die Bauteile können mit einem entsprechenden Korrosionsschutz versehen sein.

Für das Kraftübertragungselement eignet sich insbesondere ein Stahl Ck45. Dieser kann einen Gleit- und/oder Korrosionsschutzbehandlung aufweisen. Eine solche Behandlung kann z. B. eine QPQ- (Quenchen-Polieren-Quenchen) oder NiRo-Finishing-Behandlung sein. Mit NiRo-Finish ist ein Gas-Nitrocarburieren gemeint, wie es beispielsweise bei der Firma Logotherm entwickelt wurde.

Die Dichtungen sollten vorzugsweise aus Werkstoffen gefertigt sein, welche die Eigenschaften des Mediums, sowie des Mediumdruckes und einer Prozesstemperatur widerstehen. Die Dichtungen können aus einem Elastomer sein.

Die erfindungsgemässe Anordnung findet insbesondere Anwendung auf dem Gebiet der Druckbehälter. Der Druckbehälter stellt hier den ersten Verbindungskörper dar, während der zweite Verbindungskörper bevorzugt ein Verschlussdeckel zum Verschliessen des Druckbehälters ist. Unter dem Begriff Druckbehälter sind Behälter zu verstehen, welche dazu ausgelegt sind, Drücke aufzunehmen, welche höher (Überdruck) oder niedriger (Unterdruck) sind als der Umgebungsdruck. Die Drücke können beispielsweise im Bereich von -1 bis 100 bar liegen. Unter dem Begriff Druckbehälter sind ferner auch Behälter zu verstehen, welche z. B nur einen kurzeitigen Unterdruck oder Überdruck, z. B. einen Druckimpuls aufnehmen. Solche Druckimpulse werden z. B. durch Rückstosskräfte erzeugt.

Die erfindungsgemässe Schnellverbindungsanordnung findet besonders bevorzugt bei Autoklaven Anwendung.

Die Verbindungsanordnung eignet sich insbesondere für kleine Behälter mit entsprechend kleinen Verschlüssen, bei welchen das Kraftübertragungselement z. B. einen Durchmesser von 100 mm oder grösser, insbesondere von 150 mm oder grösser aufweist.

Die Verbindungsanordnung eignet sich jedoch ebenso für grosse Behälter mit entsprechend grossen Verschlüssen, bei welchen das Kraftübertragungselement einen Durchmesser von 50 cm oder grösser, insbesondere von 100 cm oder grösser aufweist. Die Realisierung von Verschlüssen mit grossen Durchmessern wird höchstens durch die Fertigungsmöglichkeiten der Teile eingeschränkt.

Die Schnellverbindungsanordnung garantiert eine formschlüssige, spielfreie, sichere und störungsfreie Verbindung. Sie ist ferner einfach in der Handhabung. So lässt sich die Verbindung mit wenigen Handgriffen und mit geringem Kraftaufwandbewerkstelligen. Die für den Schliess- und Öffnungsvorgang erforderlichen Kräfte bewegen sich im Bereich von wenigen Newton. Ferner sind die Wege zum Öffnen und Schliessen der Verbindungsanordnung mit wenigen Millimetern ebenfalls gering. Die genannten Kräfte und Wege sind daher im Vergleich zu den Kräften und Wegen, welche für die Deckelbewegung eingesetzt werden, vernachlässigbar.

Die Betätigung des Schliesselements kann mit einfachen Massnahmen unter Einsatz einer Bewegungseinrichtung mit Steuerung auch automatisiert ausgeführt werden. Je nachdem, ob das Öffnen und Schliessen manuell oder automatisiert geschieht, kann dieser Vorgang einige Millisekunden bis ein paar wenige Sekunden dauern.

Die erfindungsgemässe Schnellverbindungsanordnung ist zudem kostengünstig, schnell und einfach in der Herstellung. Die Schnellverbindungsanordnung besteht insbesondere aus einfachen, kostengünstigen Bauteilen.

Trotz den genannten Vorteilen erfüllt die erfindungsgemässe Schnellverbindungsanordnung die Anforderungen an die Sicherheit einer solchen Verbindung oder übertrifft diese sogar. Ferner ist die Schnellverbindungsanordnung bzw. sind deren Komponenten einfach zu reinigen.

So lässt sich im geöffneten Zustand das Kraftübertragungselement leicht herausnehmen und wie die Nut separat reinigen. Da zwischen der Nut und dem Kraftübertragungselement Spiel besteht, können Nut und Kraftübertragungselement auch ohne Demontage, z. B. mittels Pressluft, Wasserdampf oder Wasserstrahl, gereinigt und ggf. sterilisiert werden.

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1a - 1c:: eine Querschnittsansicht einer bevorzugten Ausführungsform einer Schnellverbindungsanordnung in drei verschiedenen Verbindungszuständen;
- Figur 2:: eine Querschnittsansicht eines Kraftübertragungselements für eine Schnellverbindungsanordnung gemäss Figur 1a - 1c;
- Figur 3:: eine Querschnittsansicht eines vergrösserten Ausschnitts der Schnellverbindungsanordnung gemäss Figur 1a;
- Figur 4a - 4c:: Draufsichten von drei verschiedenen Ausführungsformen eines erfindungsgemässen Kraftübertragungselements;
- Figur 5a - 5b:: Querschnittsansichten einer ersten Ausführungsform einer erfmdungsgemässen Betätigungsvorrichtung;
- Figur 6a - 6b:: Querschnittsansichten einer zweiten Ausführungsform einer erfindungsgemässen Betätigungsvorrichtung;
- Figur 7:: Draufsicht einer Betätigungsvorrichtung mit Bewegungseinrichtung zur automatisierten Betätigung.

Grundsätzlich sind in den Figuren gleiche Teile mit gleichen Bezugszeichen versehen.

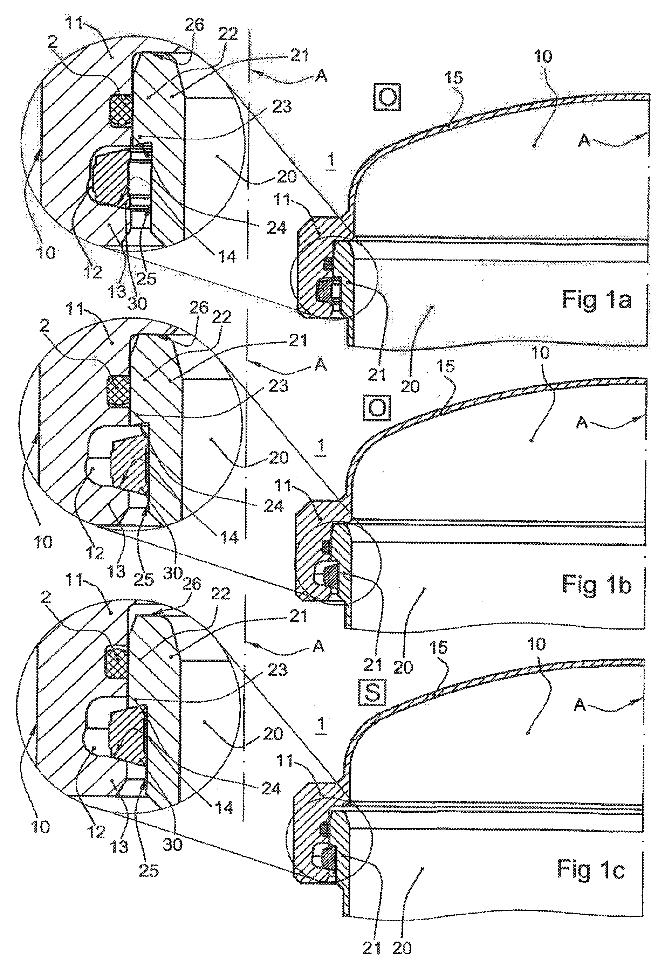

Die Figuren 1a - 1c zeigen eine erfindungsgemässe Ausführungsform einer Schnellverbindungsanordnung 1 in verschiedenen Position und Zuständen zwischen einer Offen- und einer Schliessstellung.

Die Schnellverbindungsanordnung 1 umfasst einen ersten und zweiten Verbindungskörper 10, 20. Der erste Verbindungskörper 10 ist als Verschlussdeckel und der zweite Verbindungskörper 20 als Druckbehälter ausgebildet.

Der Druckbehälter 20 weist einen Eingriffabschnitt 21 zum Eingriff in einen Umfassungsabschnitt 11 am Verschlussdeckel 10 auf. Der Eingriffabschnitt 21 ist als hohlzylinderförmiger Endabschnitt mit einer endseitigen Stirnfläche 26 ausgebildet. Der Eingriffabschnitt 21 weist einen nach aussen gerichteten, radial umlaufenden Vorsprung 22 auf Der Vorsprung bildet eine Anschlagschulter 23 mit einer Anschlagfläche 24 für ein Kraftübertragungselement 30 aus. Der Eingriffabschnitt 21 bildet im Anschluss an den Vorsprung 22, welcher hier einem Absatz gleichkommt, eine zurückversetzte zylinderförmige Führungsfläche 25 für das Kraftübertragungselement 30 aus.

Der Verschlussdeckel 10 weist wie erwähnt einen Umfassungsabschnitt 11 zum Umfassen des Eingriffabschnittes 21 am Verschlussdeckel 20 auf. Der Umfassungsabschnitt 11 ist als hohlzylinderförmiger Abschnitt ausgebildet, welcher an einem Deckelelement 15 angeformt ist.

Der Umfassungsabschnitt 11 weist innenseitig eine radial umlaufende Nut 12 auf, welche das Kraftübertragungselement 30 aufnimmt. Die Nut 12 und der Vorsprung 22 sind in zusammengeführtem Zustand von Verschlussdeckel 10 und Druckbehälter 20 gegeneinander gerichtet. Die Nut 12 weist eine Anschlagschulter 13 mit einer Anschlagfläche 14 auf. Die Anschlagfläche 24 des Vorsprungs 22 und die Anschlagfläche 14 der Nut sind gegeneinander geneigt ausgebildet, wobei die beiden Flächen in Richtung der Nut 12 konvergieren.

Der Verschlussdeckel 10 und der Druckbehälter 20 sind in einer Richtung parallel zu einer Verbindungsachse A zusammenführbar und voneinander separierbar.

Der Schnellverbindungsanordnung 1 ist über eine zwischen dem Verschlussdeckel 10 und der Druckbehälter 20 angeordneten Dichtungsring 2 abgedichtet. Der Dichtungsring 2 ist in einer auf der Innenseite des Umfassungsabschnittes 11 angeordneten Ringnut platziert. Der Dichtungsring 2 kann jedoch auch in einer an der Aussenseite des Eingriffabschnittes 21 angeordneten Ringnut gelagert sein (nicht gezeigt). Der Dichtungsring 2 und die dazugehörige Ringnut können oberhalb des Kraftübertragungselementes 30 (Fig. 1a-1c) oder unterhalb des Kraftübertragungselementes 30 (nicht gezeigt) angeordnet sein.

Ferner enthält die Schnellverbindungsanordnung 1 ein ringförmiges Kraftübertragungselement 30. Dieses ist querschnittlich trapezförmig ausgebildet. An seinen Trapezschenkeln weist dieses eine erste und zweite Auflagefläche 31a, 31b auf, welche einander entsprechend gegenüber liegen. Die beiden Auflageflächen 31 a, 31 b erstrecken sich jeweils von einer, zur Nut 12 hin angeordneten, als kürzere Grundseite ausgebildeten Aussenseite 32b zu einer, zum Vorsprung 22 hin angeordneten, als längere Grundseite ausgebildeten Innenseite 32a. Aussen- und Innenseite 32a, 32b verlaufen im montierten Zustand vorzugsweise parallel zueinander und parallel zur Verbindungsachse A.

Die Figur 1 a zeigt nun die Schnellverbindungsanordnung 1 nach dem Zusammenführen der beiden Verbindungskörper 10, 20 jedoch noch in Offenstellung O. Offenstellung bedeutet, dass das Kraftübertragungselement 30 mittels Spreizen in gespanntem Zustand vollständig in der Nut 12 liegt, wie dies für die Zusammenführung von Verschlussdeckel 10 und Druckbehälter 20 erforderlich ist. Eine Abdichtung durch den Dichtring findet dennoch bereits statt. In dieser Stellung schlägt der Druckbehälter 20 mit der Stirnfläche 26 innenseitig am Verschlussdeckel 10 an.

Die Figur 1b zeigt die Schnellverbindungsanordnung 1 in der Schliessstellung S jedoch vor der Erzeugung eines Überdruckes im Druckbehälter 20. Schliessstellung bedeutet, dass das Kraftübertragungselement 30 in einem entspannten Zustand vorliegt und teilweise aus der Nut 12 herausgeschoben ist. Hierzu wird die in der Offenstellung O auf das Kraftübertragungselement 30 ausgeübte Spreizkraft aufgehoben bzw. reduziert. In diesem Zustand liegt das Kraftübertragungselement 30 mit seiner Innenseite 32a der Führungsfläche 25 am Eingriffabschnitt 21 an. Der Eingriffabschnitt 21 zentriert dabei das Kraftübertragungselement 30. Ferner liegt das Kraftübertragungselement 30 mit seiner zweiten Anschlagfläche 31b der Auflagefläche 14 an der Nut 12 an.

Beim Aufbau eines Überdruckes im Druckbehälter 20 beginnen Druckkräfte auf den Verschlussdeckel 10 zu wirken. Der axial noch nicht gesicherte Verschlussdeckel verschiebt sich daher entlang der Verbindungsachse A relativ zum Druckbehälter in Richtung der wirkenden Druckkraft bis das Kraftübertragungselement 30 mit seiner ersten Anschlagfläche 31a an der Anschlagfläche 24 des Vorsprungs 22 in Anschlag kommt. Die Anschlagfläche 24 des Vorsprungs 22 wirkt dabei als Endanschlag.

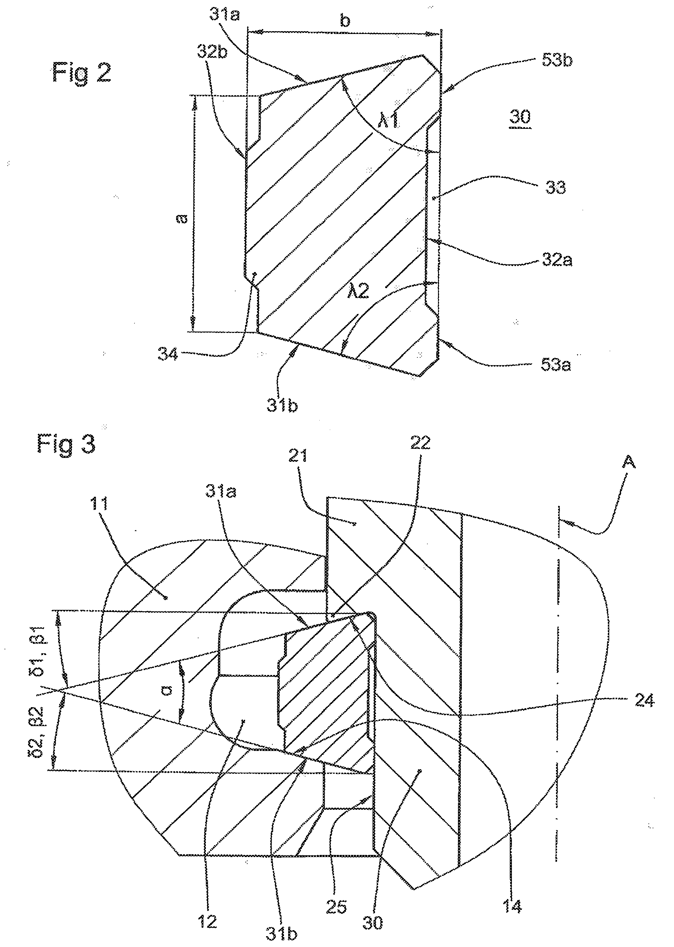

Das Kraftübertragungselement 30 ist nun zwischen der Anschlagfläche 14 an der Nut 12 und der Anschlagfläche 24 am Vorsprung 22 eingeklemmt. Ein Auseinanderführen oder Zusammenführen der Ringendabschnitte des ringförmigen Kraftübertragungselementes 30 ist nicht mehr möglich. Das Kraftübertragungselement 30 ist nämlich zum Einen durch die Führungsfläche 25 des Eingriffabschnittes 21 und zum Anderen durch die Verkeilung zwischen Nut 12 und Vorsprung 22 gegen eine radiale Verschiebung gesichert (siehe Figur 1c und 3).

Dank der Verkeilung des Kraftübertragungselementes 30 zwischen Umfassungsabschnitt 11 bzw. dessen Nut 12 und dem Eingriffabschnitt 21 bzw. dessen Vorsprung 22 wirken lediglich Scherspannungen jedoch keine Biegemomente auf das Kraftübertragungselemente 30. Dadurch ist auch ein Kippen des Kraflübertragungselementes 30 ausgeschlossen.

Das in Figur 2 in einer vergrösserten Querschnittsansicht gezeigte Kraftübertragungselement 30 weist an seiner längeren Grundseite 32a, welches der Innenseite entspricht, eine zentrale, umlaufende Vertiefung 33 auf. Auf diese Weise werden beidseits der umlaufenden Vertiefung 33 Gleitstreifen 53a, 53b definiert, mit welchen das Kraftübertragungselement 30 an der Führungsfläche 25 des Eingriffabschnittes 21 zu liegen kommt. Das Kraftübertragungselement 30 gleitet nun bei einer Relativverschiebung zwischen Verschlussdeckel 10 und Druckbehälter 20 mit seinen Gleitstreifen entlang der Führungsfläche 25. Allfälliger Schmutz wird dabei in den zwischen der Vertiefung 33 und der Führungsfläche 25 gebildeten Spalt geführt und behindert die Gleitführung nicht weiter.

Das Kraftübertragungselement 30 weist ferner an seiner kürzeren Grundseite 32b, welches der Aussenseite entspricht, eine zentrale, umlaufende Erhebung 34 auf. Diese dient dazu, das ringförmige Kraftübertragungselement 30 in geöffnetem Zustand zu zentrieren.

Die erste Auflagefläche 31a schliesst mit der längeren Grundseite 32a einen Winkel λ₁ von kleiner 90°, insbesondere zwischen 70° und 80°, ein. Die zweite Auflagefläche 31b schliesst mit der längeren Grundseite 32a ebenfalls einen Winkel λ₂ von kleiner 90°, insbesondere zwischen 70° und 80°, ein. Die beiden Winkel λ₁, λ₂ sind vorzugsweise identisch.

Das Kraftübertragungselement weist eine minimale Höhe a auf, welche grösser ist als die maximale Breite b. Die Höhe a bezieht sich auf eine Bauteilausdehnung parallel zur Verbindungsachse A. Die Breite b bezieht sich auf eine Bauteilausdehnung senkrecht zur Verbindungsachse A.

Die Figur 3 zeigt einen vergrösserten Ausschnitt des Schliesszustandes nach Figur 1c. Aus Figur 3 ist ersichtlich, dass die beiden Auflageflächen 31a, 31b des Kraftübertragungselementes 30 geneigt ausgebildet sind und in Richtung R der Nut 12 konvergieren. Die beiden geneigten Auflageflächen 31 a, 31b schliessen einen spitzen Winkel α ein.

Eine senkrecht zur Verbindungsachse A verlaufende Ebene E₁ schliesst mit folgenden Flächen die folgenden spitzen Winkel ein:
- einen Winkel β₁ mit der Anschlagfläche 24 des Vorsprungs 22;
- einen Winkel δ₁ mit der ersten Auflagefläche 31a des Kraftübertragungselementes 30;
- einen Winkel β₂ mit der Anschlagfläche 14 der Nut 12;
- einen Winkel δ₂ mit der zweiten Auflagefläche 31 b des Kraftübertragungselementes 30.
Gemäss dem vorliegenden Ausführungsbeispiel sind die Winkel β₁, δ₁, β₂, δ₂ vorzugsweise identisch. Dieser beträgt rund 10°.

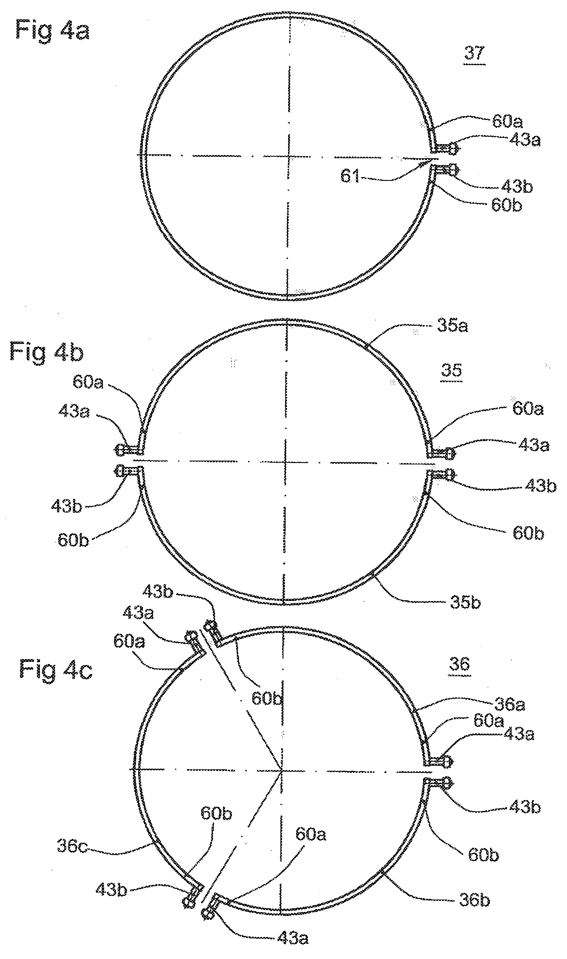

Die Figuren 4a - 4c zeigen verschiedene Ausführungsformen von ringförmigen Kraftübertragungselementen.

Das Kraftübertragungselement gemäss Figur 4a liegt als offener, elastischer Ring 37 vor. Dieser weist einen ersten und zweiten Ringendabschnitt 60a, 60b auf, welche einen Ringspalt 61 einschliessen. An beiden Ringendabschnitten 60a, 60b ist je ein Führungsglied 43a, 43b in Form eines Führungszapfens befestigt. Die Führungsglieder 43a, 43b weisen radial nach aussen. Der Ring 37 lässt sich mittels einer nachfolgend beschriebenen Betätigungsvorrichtung 40 über die beiden Führungsglieder 43a, 43b spreizen und zusammenziehen. Dadurch kann der Durchmesser des Ringes 37 und somit seine Lage in der Nut 12 verändert werden.

Die Figur 4b zeigt einen zweiteiligen Ring 35 aus zwei gleich grossen, elastischen Ringabschnitten 35a, 35b. Die beiden Ringabschnitte 35a, 35b bilden jeweils zwei Ringendabschnitte 60a, 60b aus. Der Ring umfasst entsprechend zwei Paarungen von Ringendabschnitten 60a, 60b, welche einander gegenüber liegende Ringspalte einschliessen. An den Ringendabschnitten 60a, 60b ist jeweils ein Führungsglied 43a, 43b in der Form eines Führungszapfens angebracht. Es liegen somit zwei Paare von Führungsgliedern 43a, 43b vor, welche jeweils radial nach aussen gerichtet sind. Der zweiteilige Ring 35 lässt sich nun mittels je einer nachfolgend beschriebenen Betätigungsvorrichtung 40 über jeweils ein Paar von Führungsgliedern 43a, 43b an insgesamt zwei Stellen spreizen und zusammenziehen. Dadurch kann der Durchmesser des Ringes 35 und somit seine Lage in der Nut 12 verändert werden.

Die Figur 4c zeigt einen dreiteiligen Ring 36 aus drei gleich grossen elastischen Ringabschnitten 36a, 36b, 36c, welche jeweils einen Winkel von 120° einschliessen. Die drei Ringabschnitte 36a, 36b, 36c bilden jeweils zwei Ringendabschnitte 60a, 60b aus. Insgesamt liegen also drei Paarungen von Ringendabschnitten 60a, 60b vor, welche jeweils einen Ringspalt einschliessen. An den Ringendabschnitten 60a, 60b ist jeweils ein Führungsglied 43a, 43b in der Form eines Führungszapfens angebracht. Es liegen somit drei Paare von Führungsgliedern 43a, 43b vor, welche jeweils radial nach aussen gerichtet sind. Ringspalte sind entsprechend in einem Winkel von 120° um den Umfang des Ringes angeordnet. Der dreiteilige Ring 36 lässt sich nun mittels jeweils einer nachfolgend beschriebenen Betätigungsvorrichtung 40 über jeweils ein Paar von Führungsgliedern 43a, 43b an insgesamt drei Stellen spreizen und zusammenziehen. Dadurch kann der Durchmesser des Ringes 36 und somit seine Lage in der Nut 12 verändert werden.

Bei grossen Durchmessern ist sogar eine Aufteilung in mehr als drei Ringabschnitte möglich.

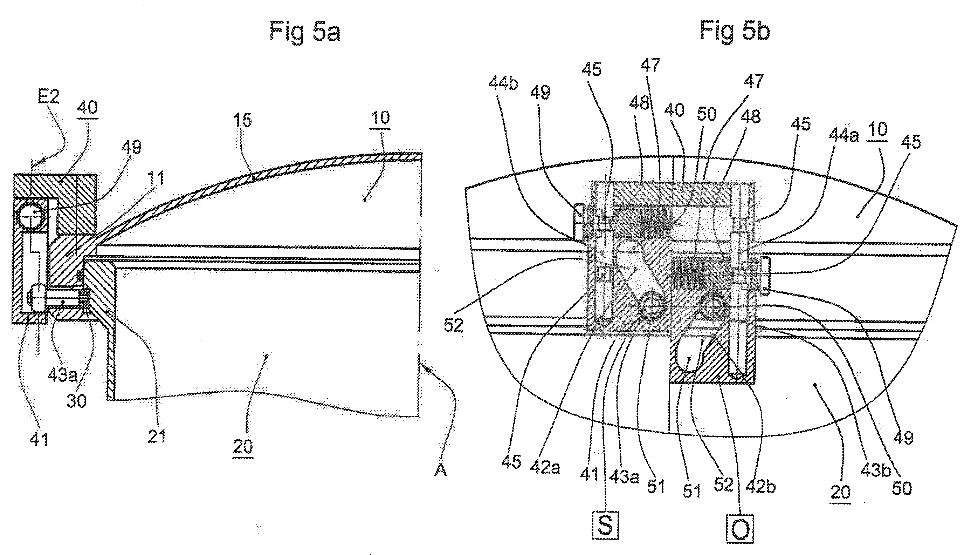

Die in Figur 5a und Sb gezeigte erste Ausführungsform einer Betätigungsvorrichtung 40 enthält ein Schliesselement 41 in Ausführung einer Schieberplatte mit jeweils einer Kulissenführung 42a, 42b für die Führungsglieder 43a, 43b. Die Kulissenführungen 42a, 42b sind als Führungsbahnen ausgebildet. Das Schliesselement 41 ist aussen am Umfassungsabschnitt 11 des Verschlussdeckels 10 angebracht. Die Kulissenführungen 42a, 42b liegen in einer Führungsebene E₂, die parallel zur Verbindungsachse A verläuft.

Der Verschlussdeckel 10 weist einen Umfassungsabschnitt 11 und ein Deckelement 15 auf. Die radial umlaufende Nut zur Aufnahme des ringförmig ausgebildeten Kraftübertragungselements 30 ist am Innenumfang des Umfassungsabschnitts 11 angeordnet. Der radiale Vorsprung mit der Anschlagfläche ist am Aussenumfang des Eingriffabschnittes 21 des Druckbehälters 200 angeordnet. Der Schliessvorgang erfolgt durch Zusammenführen der Ringendabschnitte des Kraftübertragungselements 30 unter Verkleinerung des Durchmessers.

Die Führungsglieder 43a, 43b sind an einem Ende mit jeweils einem Endabschnitt des ringförmigen Kraftübertragungselementes 30 radial verbunden und durch einen Durchbruch im Umfassungsabschnitt 11 nach aussen zum Schliesselement 41 geführt. Die Führungsglieder 43a, 43b sind mit ihrem anderen Ende jeweils in der Führungsbahn der Kulissenführung 42a, 42b geführt.

Das Schliesselement 41 ist über zwei voneinander beabstandete und parallel verlaufende Führungsstifte 44a, 44b in der Führungsebene E₂ linear verschiebbar geführt. Durch den Einsatz zweier Führungsstifte 44a, 44b kann ein Verkanten des Schliesselements 41 während des Verschiebens verhindert werden.

Die Führungsstifte 44a, 44b weisen auf der Höhe der Endpositionen der Führungsglieder 43a, 43b in der Kulissenführung 42a, 42b jeweils eine lokale Querschnittsverengung 45 auf. Die Querschnittsverengungen 45 stellen Einraststellen für ein Arretierelement 48 einer Arretiervorrichtung dar. Das Arretierelement 48 wird über ein Rückstellelement 47 in Form einer Schraubenfeder in die Querschnittsverengung bzw. Vertiefung 45 gedrückt und sichert so das Schliesselement 41 gegen eine ungewollte Verschiebung.

Die Führungsbahn der Kulissenführung 42a, 42b weist nun eine erste Endposition 50, welche die Offenstellung definiert, sowie eine zweite Endposition 51, welche die Schliessstellung definiert, auf. Die Endpositionen 50, 51 sind bevorzugt so ausgestaltet, dass die Führungsglieder 43a, 43b in der Endposition 50, 51 eine Selbsthemmung einnehmen oder in diese formschlüssig einrasten. Die beiden Endpositionen 50, 51 sind über einen Bahnabschnitt 52 miteinander verbunden, welcher gegenüber der Verbindungsachse A schräg verläuft. Die beiden Kulissenführungen 42a, 42b verlaufen nun in gleicher Orientierung nebeneinander, wobei ihre ersten Endpositionen 50 die grössere Distanz zueinander aufweisen als ihre zweiten Endpositionen 51. Durch das Verschieben der Führungsglieder 43a, 43b entlang der Führungsbahn 52 von einer ersten in eine zweite Endposition 50, 51 oder umgekehrt, werden die Führungsglieder 43a, 43b entsprechend auseinander oder zueinander hin geführt, wodurch je nach Auslegung der Anordnung eine Spreizung oder ein Zusammenziehen des ringförmigen Kraftübertragungselements 30 bewirkt wird.

Das Arretierelement 48 wirkt mit einem aussenseitig am Schliesselement 41 angeordneten Betätigungselement 49 in Form eines Druckknopfes zusammen. Durch Drücken des Druckknopfes entgegen der Rückstellrichtung der Schraubenfeder 47 wird das Arretierelement 48 aus der Vertiefung 45 gehoben, so dass das Schliesselement 41 verschoben werden kann. Sobald der Druckknopf losgelassen wird, rastet das Arretierelement 48 bei fortgesetzter Verschiebung spätestens bei Erreichen einer Endposition 50, 51 selbsttätig in die Vertiefung 45 am Längsführungselement 44a, 44b wieder ein und blockiert das Schliesselement 41. Jedem Längsführungselement 44a, 44b ist eine solche Arretiervorrichtung mit Betätigungselement 48 zugeordnet. Die beiden Betätigungselemente 49 liegen in Distanz zueinander und einander gegenüber, so dass diese gleichzeitig mit zwei gespreizten Fingern einer Hand bedient werden können.

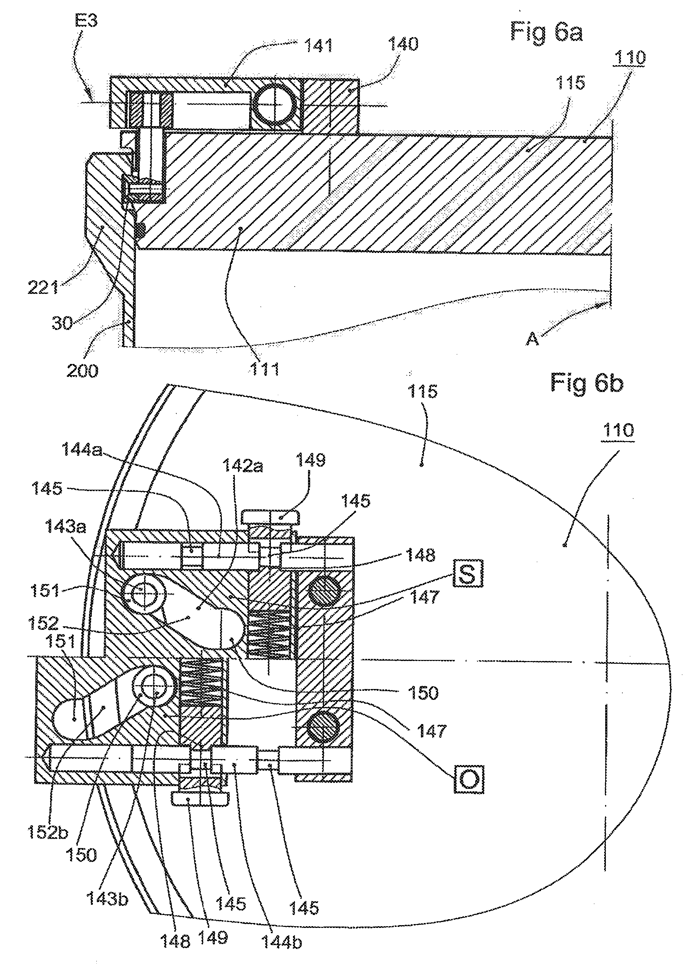

Die in Figur 6a und 6b gezeigte zweite Ausführungsform einer Betätigungsvorrichtung 140 enthält ein Schliesselement 141 in Ausführung einer Schieberplatte mit jeweils einer Kulissenführung 142a, 142b für die Führungsglieder 143a, 143b. Die Kulissenführungen 142a, 142b sind als Führungsbahnen ausgebildet. Das Schliesselement 141 ist aussen am Deckelelement 115 des Verschlussdeckels 110 angebracht. Die Kulissenführungen 142a, 142b liegen in einer Führungsebene E₃, die senkrecht zur Verbindungsachse A verläuft.

Der Verschlussdeckel 110 weist einen Eingriffabschnitt 111 auf. Die radial umlaufende Nut zur Aufnahme des ringförmig ausgebildeten Kraftübertragungselements 30 ist am Aussenumfang des Eingriffabschnittes 111 angeordnet. Der radiale Vorsprung mit der Anschlagfläche ist am Innenumfang des Umfassungsabschnittes 221 des Druckbehälters 200 angeordnet. Im Gegensatz zum Ausführungsbeispiel gemäss Figur 5a und 5b erfolgt der Schliessvorganges nicht durch das Zusammenführen sondern durch das Auseinanderführen der Ringendabschnitte 60a, 60b des Kraftübertragungselements 30.

Die Führungsglieder 143a, 143b sind an einem Ende mit jeweils einem Endabschnitt des ringförmigen Kraftübertragungselementes 30 radial verbunden und durch einen randseitigen Durchbruch im Deckelelement 115 nach oben zum Schliesselement 141 geführt. Die Führungsglieder 143a, 143b sind mit ihrem anderen Ende jeweils in der Führungsbahn der Kulissenführung 142a, 142b geführt.

Das Schliesselement 141 ist ebenfalls über zwei voneinander beabstandete und parallel verlaufende Führungsstifte 144a, 144b in der Führungsebene E₃ linear verschiebbar geführt.

Die Führungsstifte 144a, 144b weisen auf der Höhe der Endpositionen der Führungsglieder 143a, 143b in der Kulissenführung 142a, 142b jeweils eine lokale Querschnittsverengung 145 auf. Die Querschnittsverengungen 145 stellen Einraststellen für ein Arretierelement 148 einer Arretiervorrichtung dar. Das Arretierelement 148 wird über ein Rückstellelement 147 in Form einer Schraubenfeder in die Querschnittsverengung bzw. Vertiefung 145 gedrückt und sichert so das Schliesselement 141 gegen eine ungewollte Verschiebung.

Die Führungsbahn der Kulissenführung 142a, 142b weist nun eine erste Endposition 150, welche Offenstellung definiert, sowie eine zweite Endposition 151, welche die Schliessstellung definiert, auf. Die Endpositionen 150, 151 sind bevorzugt so ausgestaltet, dass die Führungsglieder 143a, 143b in der Endposition 150, 151 eine Selbsthemmung einnehmen oder in diese formschlüssig einrasten. Die beiden Endpositionen 150, 151 sind über einen Bahnabschnitt 152 miteinander verbunden, welcher gegenüber der Verbindungsachse A schräg verläuft. Die beiden Kulissenführungen 142a, 142b verlaufen nun in gleicher Orientierung nebeneinander, wobei ihre ersten Endpositionen 150 die grössere Distanz zueinander aufweisen als ihre zweiten Endpositionen 151. Durch das Verschieben der Führungsglieder 143a, 143b entlang der Führungsbahn 152 von einer ersten in eine zweite Endposition 150, 151 oder umgekehrt, werden die Führungsglieder 143a, 143b entsprechend auseinander oder zueinander hin geführt, wodurch je nach Auslegung der Verbindungsanordnung eine Spreizung oder ein Zusammenziehen des ringförmigen Kraftübertragungselements 30 ausgeübt wird.

Die obere Halbseite der Figur 6b zeigt das Schliesselement 141 in der Schliessstellung. Die untere Halbseite zeigt das Schliesselement 141 in der Offenstellung.

Das Arretierelement 148 wirkt mit einem aussenseitig am Schliesselement 141 angeordneten Betätigungselement 149 in Form eines Druckknopfes zusammen. Durch Drücken des Druckknopfes 149 entgegen der Rückstellrichtung der Schraubenfeder 147 wird das Arretierelement 148 aus der Vertiefung 145 gehoben, so dass das Schliesselement 141 verschoben werden kann. Sobald der Druckknopf 149 losgelassen wird, rastet das Arretierelement 148 bei fortgesetzter Verschiebung spätestens bei Erreichen einer Endposition 150, 151 selbsttätig in die Vertiefung 145 am Längsfuhrungselement 144a, 144b wieder ein und blockiert das Schliesselement 141. Jedem Längsführungselement 144a, 144b ist eine solche Arretiervorrichtung mit Betätigungselement 148 zugeordnet. Die beiden Betätigungselemente 149 liegen nun in Distanz zueinander und einander gegenüber, so dass diese gleichzeitig mit zwei gespreizten Fingern einer Hand bedient werden können.

Wie bereits erwähnt, kann das Schliesselement 41, 141 gemäss den Figuren 5a, 5b und 6a, 6b auch automatisch über eine entsprechende Bewegungseinrichtung mit einer Steuerung betätigt werden.

Je nach Anzahl der Ringspalte, welche das ringförmige Kraftübertragungselement ausbildet (siehe hierzu Figur 4a - 4c), kann die Schnellverbindungsanordnung gemäss Figur 5a, 5b und 6a, 6b eine oder zwei, drei oder sogar mehr als drei, entlang des Umfangs des Umfassungsabschnittes 11, 221 angeordnete Betätigungsvorrichtungen 40, 140 aufweisen.

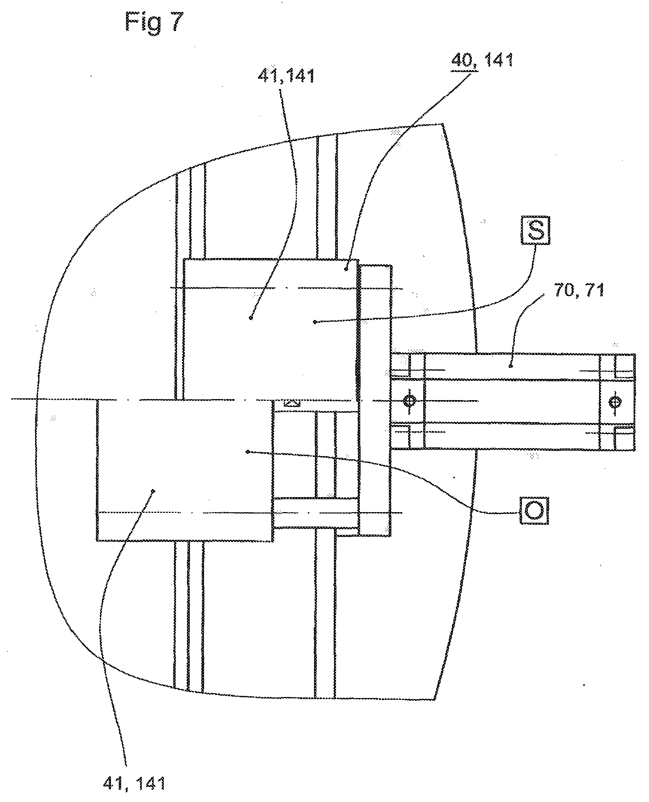

Das Schliesselement 41, 141 der Betätigungsvorrichtung 40, 140, wie in Figur 5a, 5b und 6a, 6b gezeigt, kann auch gemäss der Darstellung in Figur 7 über eine Bewegungseinrichtung 70 mit einer Steuerung automatisiert betätigt werden. Die Bewegungseinrichtung 70 umfasst hier einen pneumatischen Antrieb mit einem Pneumatikzylinder. Ebenso ist jedoch ein hydraulischer Antrieb mit Hydraulikzylinder oder ein elektrischer Linearantrieb möglich. Grundsätzlich ist jedes Bauelement möglich, welches translatorische Bewegungen erzeugen kann.

Generell sind die Ecken, welche Biegespannungen unterworfen sind, z. B. in der Nut 12 und insbesondere in der Kehlung des Vorsprungs 22 bevorzugt gerundet.

## Patentansprüche

1. Schnellverbindungsanordnung (1) für einen wenigstens zeitweise unter Druck stehenden Hohlkörper, enthaltend:
- einen ersten Verbindungskörper (10) mit einem Umfassungsabschnitt (11);
- einen zweiten Verbindungskörper (20) mit einem Eingriffabschnitt (21), wobei der erste Verbindungskörper (10) mit seinem Umfassungsabschnitt (11) entlang einer Verbindungsachse (A) wenigstens teilweise über den Eingriffabschnitt (21) des zweiten Verbindungskörpers (20) verschiebbar ist, wobei wenigstens einer der Verbindungskörper (10, 20) ein Hohlkörper ist;
- ein Kraftübertragungselement (30) mit einer Anschlagfläche (31a); wobei
a. innenseitig am Umfassungsabschnitt (11) eine radial umlaufenden Nut (12) und aussenseitig am Eingriffabschnitt (21) ein radial umlaufender Vorsprung (22); oder
b. innenseitig am Umfassungsabschnitt ein radial umlaufender Vorsprung und aussenseitig am Eingriffabschnitt eine radial umlaufenden Nut angeordnet ist, wobei der Vorsprung (22) eine Anschlagschulter (23) mit einer Anschlagfläche (24) ausbildet und das Kraftübertragungselement (30) in die radial umlaufende Nut (12) einschiebbar und zur Erstellung der Verbindung zwischen den beiden Verbindungskörpern (10, 20) mit seiner Auflagefläche (31a) an die Anschlagfläche (24) der Anschlagschulter (23) in Anschlag führbar ist,
**dadurch gekennzeichnet, dass**
das Kraftübertragungselement (30) eine der Auflagefläche (31a) gegenüberliegende weitere Auflagefläche (31b) enthält, welche in Anschlag mit der Anschlagfläche (14) einer Anschlagschulter (13) der Nut (12) bringbar ist, wobei die erste und zweite Auflageflächen (31a, 31b) des Kraftübertragungselements (30) einen Winkel (α) einschliessen und in Richtung (R) der radial umlaufenden Nut (12) aufeinander zu konvergieren.

2. Schnellverbindungsanordnung nach Anspruch 1, **dadurch gekennzeichnet, dass**:
a. der erste Verbindungskörper (10) ein Verschlussdeckel und der zweite Verbindungskörper (21) ein Hohlkörper, insbesondere ein Druckbehälter ist; oder
b. der erste Verbindungskörper ein Hohlkörper, insbesondere ein Druckbehälter, und der zweite Verbindungskörper ein Verschlussdeckel ist.

3. Schnellverbindungsanordnung nach Anspruch 1 oder 2, **dadurch gekennzeichnet, dass** der Umfassungsabschnitt (11) ein hohlzylinderförmiger Endabschnitt und/oder der Eingriffabschnitt (21) ein hohlzylinderförmiger Endabschnitt ist.

4. Schnellverbindungsanordnung nach einem der Ansprüche 1 bis 3, **dadurch gekennzeichnet, dass** die Anschlagfläche (24) der Anschlagschulter (23) des radial umlaufenden Vorsprungs (22) zu einer Ebene (E₁) senkrecht zur Verbindungsachse (A) einen spitzen Winkel (β₁) einschliessen.

5. Schnellverbindungsanordnung nach einem der Ansprüche 1 bis 4, **dadurch gekennzeichnet, dass** die Anschlagfläche (14) der radial umlaufenden Nut (12) zu einer Ebene (E₁) senkrecht zur Verbindungsachse (A) einen spitzen Winkel (β₂) einschliessen.

6. Schnellverbindungsanordnung nach einem der Ansprüche 1 bis 5, **dadurch gekennzeichnet, dass** die erste Auflagefläche (31a) des Kraftübertragungselements (30) zu einer Ebene (E₁) senkrecht zur Verbindungsachse (A) einen spitzen Winkel (δ₁) einschliesst.

7. Schnellverbindungsanordnung nach einem der Ansprüche 1 bis 6, **dadurch gekennzeichnet, dass** die zweite Auflagefläche (31b) des Kraftübertragungselements (30) zu einer Ebene (E₁) senkrecht zur Verbindungsachse (A) einen Winkel (δ₂) einschliesst.

8. Schnellverbindungsanordnung nach einem der Ansprüche 1 bis 7, **dadurch gekennzeichnet, dass** einer, mehrere oder sämtliche Winkel:
- Winkel (β₁) der Anschlagfläche (24) der Anschlagschulter (23);
- Winkel (β₂) der Anschlagfläche (14) der Nut (12);
- Winkel (δ₁) der ersten Auflagefläche (31a) des Kraftübertragungselements (30);
- Winkel (δ₂) der zweiten Auflagefläche (31b) des Kraftübertragungselements (30);
7 bis 20° (Winkelgrade) misst.

9. Schnellverbindungsanordnung nach einem der Ansprüche 1 bis 8, **dadurch gekennzeichnet, dass** das Kraftübertragungselement (30) aus zwei, drei oder mehr als drei, zu einem Ring (35; 36) zusammensetzbaren Ringabschnitten (35a, 35b; 36a, 36b, 36c) oder als offener Ring (37) ausgebildet ist.

10. Schnellverbindungsanordnung nach einem der Ansprüche 1 bis 9, **dadurch gekennzeichnet, dass** das Kraftübertragungselement querschnittlich trapezförmig ausgebildet ist, wobei die beiden einander gegenüber liegenden Auflageflächen (31a, 31b) die beiden Trapezschenkel und die der Nut (12) zugewandte Hochseite (32b) die kurze Grundseite und der kurzen Grundseite gegenüber liegende Hochseite (32a) die lange Grundseite ausbildet.

11. Schnellverbindungsanordnung nach einem der Ansprüche 1 bis 10, mit einer Betätigungsvorrichtung zum Betätigen der Schnellverbindungsanordnung (1), wobei die Betätigungsvorrichtung ein erstes und zweites Führungsglied (43a, 43b) sowie ein Schliesselement (41) enthält, welches an einem der Verbindungskörper (10, 20) beweglich angebracht ist, mit jeweils einer Kulissenführung (42a, 42b) für das erste und zweite Führungsglied (43a, 43b), wobei die Kulissenführungen (42a, 42b) in einer gemeinsamen Führungsebene (E₂) angeordnet sind,
und das erste Führungsglied (43a) mit einem ersten Endabschnitt (60a) des Kraftübertragungselements (30) und das zweite Führungsglied (43b) mit einem zweiten Endabschnitt (60b) des Kraftübertragungselement (30) verbunden sind, und das Schliesselement (41) parallel zur Führungsebene (E₂) linear verschiebbar am Verbindungskörper gelagert ist, derart dass die Führungsglieder (43a, 43b) in der Kulissenführung (42a, 42b) von einer Offenstellung (O), in welcher das Kraftübertragungselement (30) in die Nut (12) zurückgeschoben ist, in eine Schliessstellung (S), in welcher das Kraftübertragungselement (30) radial aus der Nut hervortritt, und umgekehrt führbar sind.

12. Schnellverbindungsanordnung nach Anspruch 11, **gekennzeichnet durch** ein gemeinsam mit dem Schliesselement (41) an einem der Verbindungskörper (10, 20) angebrachten Längsführungselement (44a, 44b), entlang welchem das Schliesselement (41) parallel zu Führungsebene E₂ linear verschiebbar ist.

13. Schnellverbindungsanordnung nach Anspruch 11 oder 12, **gekennzeichnet durch** Endpositionen (50, 51, 150, 151) der Kulissenführung (42a, 42b; 142a, 142b), welche die Offen- und Schliessstellung definieren, mit einer ersten Endposition (51; 150), in welcher die beiden Führungsglieder (43a, 43b; 143a, 143b) eine minimale Distanz zueinander aufweisen, und einer zweite Endposition (50; 151), in welcher die beiden Führungsglieder (43a, 43b; 143a, 143b) eine maximale Distanz zueinander aufweisen.

14. Schnellverbindungsanordnung nach einem der Ansprüche 11 bis 13, **dadurch gekennzeichnet, dass**:
a. das Schliesselement (141) auf einem Deckelelement (115) des Verschlussdeckels (110) angeordnet ist, und die Kulissenführungen (142a, 142b) in einer Führungsebene (E₃) liegen, die quer, insbesondere senkrecht, zur Verbindungsachse A verläuft; oder
b. das Schliesselement (41) am Aussenumfang eines Umfassungsabschnittes (11) des Verschlussdeckels (10) angeordnet ist, und die Kulissenführungen (42a, 42b) in einer Führungsebene (E₂) liegen, die gleichgerichtet, insbesondere parallel, zur Verbindungsachse A verläuft.

15. Kraftübertragungselement zur Verwendung in einer Schnellverbindungsanordnung (1) gemäss einem der Ansprüche 1 bis 10, wobei das Kraftübertragungselement aus zwei, drei oder mehr als drei, zu einem Ring (35; 36) zusammensetzbaren elastischen Ringabschnitten (35a, 35b; 36a, 36b, 36c) oder als offener, elastischer Ring (37) ausgebildet ist,
**dadurch gekennzeichnet, dass**
das Kraftübertragungselement (30) querschnittlich trapezförmig ausgebildet ist, mit:
- einer ersten, kürzeren, die Aussenseite ausbildende Grundseite, welche die erste Hochseite (32b) definiert;
- einer zweiten, längeren, die Innenseite ausbildende Grundseite, welche die zweite Hochseite (32a) definiert und vorzugsweise zur ersten Grundseite parallel verläuft;
- einen ersten Trapezschenkel, welcher die erste Auflagefläche (31 a) definiert;
- einen zweiten Trapezschenkel, welcher eine zweite Auflagefläche (32) definiert,
wobei die beiden Trapezschenkel die beiden Grundseiten miteinander verbinden, und die Trapezschenkel mit der zweiten Hochseite jeweils einen Winkel von kleiner 90° einschliessen.

## Claims

1. A quick-connection arrangement (1) for a hollow body which at least temporally is under pressure, comprising:
- a first connection body (10) with an embracing section (11);
- a second connection body (20) with an engaging section (21), wherein the first connection body (10) with its embracing section (11) can be displaced along a connection axis (A) at least partly over the engaging section (21) of the second connection body (20), wherein at least one of the connection bodies (10, 20) is a hollow body;
- a force transmission element (30) with an abutment surface (31a), wherein
a. at the inner side, a radially peripheral groove (12) is arranged on the embracing section (11), and at the outer side a radially peripheral projection (22) is arranged on the engaging section (21); or
b. at the inner side, a radially peripheral projection is arranged on the embracing section and at the outer side a radially peripheral groove is arranged on the engaging section,
wherein the projection (22) forms an abutment shoulder (23) with an abutment surface (24), and the force transmission element (30) can be inserted into the radially peripheral groove (12) and for creating the connection between the two connection bodies (10, 20) can be led with its contact surface (31a) in abutment onto the abutment surface (24) of the abutment shoulder (23),
**characterised in that**
the force transmission element (30) comprises a further contact surface (31b) which lies opposite the contact surface (31a) and which can be brought to abut with the abutment surface (14) of an abutment shoulder (13) of the groove (12), wherein the first and the second contact surfaces (31a, 31 b) of the force transmission element (30) enclose an angle (a) and converge to one another in the direction (R) of the radially peripheral groove (12).

2. A quick-connection arrangement according to claim 1, **characterised in that**
a. the first connection body (10) is a closure cover, and the second connection body (21) a hollow body, in particular a pressure container; or
b. the first connection body is a hollow body, in particular a pressure container, and the second connection body is a closure cover.

3. A quick-connection arrangement according to claim 1 or 2, **characterised in that** the embracing section (11) is a hollow-cylinder-shaped end-section, and/or the engaging section (21) is a hollow-cylinder-shaped end-section.

4. A quick-connection arrangement according to one of the claims 1 to 3, **characterised in that** the abutment surface (24) of the abutment shoulder (23) of the radially peripheral projection (22) encloses an acute angle (ß₁) to a plane (E₁) perpendicular to the connection axis (A).

5. A quick-connection arrangement according to one of the claims 1 to 4, **characterised in that** the abutment surface (14) of the radially peripheral groove (12) encloses an acute angle (ß₂) to a plane (E₁) perpendicular to the connection axis (A).

6. A quick-connection arrangement according to one of the claims 1 to 5, **characterised in that** the first contact surface (31a) of the force transmission element (30) encloses an acute angle (δ₁) to a plane (E₁) perpendicular to the connection axis (A).

7. A quick-connection arrangement according to one of the claims 1 to 6, **characterised in that** the second contact surface (31b) of the force transmission element (30) encloses an angle (δ₂) to a plane (E₁) perpendicular to the connection axis (A).

8. A quick-connection arrangement according to one of the claims 1 to 7, **characterised in that** one, more or all angles:
- angle (ß₃) of the abutment surface (24) of the abutment shoulder (23);
- angle (ß₂) of the abutment surface (14) of the groove (12);
- angle (δ₁) of the first contact surface (31) of the force transmission element (30);
- angle (δ₂) of the second contact surface (31 b) of the force transmission elements (30);
measures 7 to 20° (angle degrees).

9. A quick-connection arrangement according to one of the claims 1 to 8, **characterised in that** the force transmission element (30) is formed from two, three or more than three ring sections (35a, 35b; 36a, 36b, 26c) which can be put together into a ring (35; 36), or is designed as an open ring (37).

10. A quick-connection arrangement according to one of the claims 1 to 9, **characterised in that** the force transmission element with regard to cross section is designed in a trapezoidal manner, wherein the two contact surfaces (31a, 31b) which lie opposite one another form the two trapezium legs and the high side (32b) which faces the groove (12) forms the short base, and the high side (32a) lying opposite the short base forms the long base.

11. A quick-connection arrangement according to one of the claims 1 to 10, with an actuation device for actuating a quick connection arrangement (1), wherein the actuation device comprises a first and second guide member (43a, 43b) as well as a closure element (41) which is movably attached on one of the connection bodies (10, 20), in each case with a guide mechanism (42a, 42b) for the first and the second guide member (43a, 43b), wherein the guide mechanisms (42a, 42b) are arranged in a common guide plane (E₂),
and the first guide member (43a) is connected to a first end-section (60a) of the force transmission element (30), and the second guide member (43b) is connected to a second end section (60b) of the force transmission element (30), and the closure element (41) parallel to the guide plane (E₂) is mounted on the connection body in a linearly displaceable manner such that the guide members (43, 43b) in the guide mechanism (42, 42b) can be guided from an open position (O), in which the force transmission element (30) is pushed back into the groove (12), into a closure position (S), in which the force transmission element (30) projects radially out of the groove, and vice versa.

12. A quick-connection arrangement according to claim 11, **characterised by** a longitudinal guide element (44a, 44b) which is attached together with the closure element (41) on one of the connection bodies (10, 20) and along which the closure element (41) is linearly displaceable parallel to the guide plane (E₂).

13. A quick-connection arrangement according to claim 11 or 12, **characterised by** end positions (50, 51, 150, 151) of the guide mechanism (42a, 42b; 142a, 142b) which define the open and closure position, with a first end position (51; 150), in which the two guide members (43a, 43b; 143a, 143b) have a minimal distance to one another, and a end second position (50 151), in which the two guide members (43a, 43b; 143a, 143b) have a maximal distance to one another.

14. A quick-connection arrangement according to one of the claims 11 to 13, **characterised in that**
a. the closure element (141) is arranged on a cover element (115) of the closure cover (110), and the guide mechanisms (142, 142b) lie in a guide plane (E₃) which runs transversely, in particular perpendicularly, to the connection axis A; or
b. the closure element (41) is arranged on the outer periphery of an embracing section (11) of the closure cover (10), and the guide mechanisms (42a, 42b) lie in a guide plane (E₂) which is directed equally, in particular parallel, to the connection axis A.

15. A force transmission element for use in a quick-connection arrangement (1) according to one of the claims 1 to 10, wherein the force transmission element is formed from two, three or more than three elastic ring sections (35a 35b; 36a, 36b, 36c) which can be put together into a ring (35; 36) or is formed as an open, elastic ring (37),
**characterised in that**
the force transmission element (30) is designed trapezoidally in cross section with
- a first, shorter base which forms the outer side and which defines the first high side (32b);
- a second, longer base which forms the inner side and defines the second high side (32) and preferably runs parallel to a first base;
- a first trapezium leg which defines the first contact surface (31a);
- a second trapezium leg which defines a second contact surface (32),
wherein the two trapezium legs connect the two bases to one another, and the trapezium legs with the second high side in each case enclose an angle of less than 90°.

## Revendications

1. Ensemble (1) de fermeture rapide pour un corps creux placé a moins temporairement sous pression, l'ensemble comprenant:
un premier corps de liaison (10) doté d'une section de pourtour (11),
un deuxième corps de liaison (20) doté d'une section d'engagement (21), le premier corps de liaison (10) pouvant coulisser par sa section de pourtour (11) le long d'un axe de liaison (A) au moins en partie au-dessus de la section d'engagement (21) du deuxième corps de liaison (20), au moins l'un des corps de liaison (10, 20) étant un corps creux,
un élément (30) de transfert de force doté d'une surface de butée (31a), tandis que
a. sur le côté intérieur de la section de pourtour (11) est disposée une rainure périphérique radiale (12) et sur le côté extérieur de la section d'engagement (21) est disposée une saillie périphérique radiale (22) ou
b. sur le côté intérieur de la section de pourtour est disposée une saillie périphérique radiale et sur le côté extérieur de la section d'engagement est disposée une rainure périphérique radiale,
la saillie (22) formant un épaulement de butée (23) avec une surface de butée (24) et l'élément (30) de transfert de force pouvant être inséré dans la rainure périphérique radiale (12) et peut être amené par sa surface de pose (31a) sur la surface de butée (24) de l'épaulement de butée (23) pour venir y buter et établir la liaison entre les deux corps de liaison (10, 20),
**caractérisé en ce que**
l'élément (30) de transfert de force contient une autre surface de pose (31b) située face à la surface de pose (31a) et qui peut être amenée à venir buter contre la surface de butée (14) d'un épaulement de butée (13) de la rainure (12),
**en ce que** la première et la deuxième surface de pose (31a, 31b) de l'élément (30) de transfert de force forment un angle (α) et convergent l'une vers l'autre dans la direction (R) de la rainure périphérique radiale (12).

2. Ensemble de fermeture rapide selon la revendication 1, **caractérisé en ce que**
a. le premier corps de liaison (10) est un couvercle de fermeture et le deuxième corps de liaison (21) un corps creux, en particulier un récipient sous pression ou **en ce que**
b. le premier corps de liaison est un corps creux, en particulier un récipient sous pression, et le deuxième corps de liaison un couvercle de fermeture.

3. Ensemble de fermeture rapide selon les revendications 1 ou 2, **caractérisé en ce que** la section de pourtour (11) est une section d'extrémité en forme de cylindre creux et/ou la section d'engagement (21) est une section d'extrémité en forme de cylindre creux.

4. Ensemble de fermeture rapide selon l'une des revendications 1 à 3, **caractérisé en ce que** la surface de butée (24) de l'épaulement de butée (23) de la saillie périphérique radiale (22) forme un angle aigu (β₁) par rapport à un plan (E₁) perpendiculaire à l'axe de liaison (A).

5. Ensemble de fermeture rapide selon l'une des revendications 1 à 4, **caractérisé en ce que** la surface de butée (14) de la rainure périphérique radiale (12) forme un angle aigu (β₂) par rapport à un plan (E₁) perpendiculaire à l'axe de liaison (A).

6. Ensemble de fermeture rapide selon l'une des revendications 1 à 5, **caractérisé en ce que** la première surface de pose (31a) de l'élément (30) de transfert de force forme un angle aigu (δ₁) par rapport à un plan (E₁) perpendiculaire à l'axe de liaison (A).

7. Ensemble de fermeture rapide selon l'une des revendications 1 à 6, **caractérisé en ce que** la deuxième surface de pose (31b) de l'élément (30) de transfert de force forme un angle (δ₂) par rapport à un plan (E₁) perpendiculaire à l'axe de liaison (a).

8. Ensemble de fermeture rapide selon l'une des revendications 1 à 7, **caractérisé en ce qu'**un angle, plusieurs angles ou tous les angles, à savoir:
l'angle (β₁) de la surface de butée (24) de l'épaulement de butée (23),
l'angle (β₂) de la surface de butée (14) de la rainure (12),
l'angle (δ₁) de la première surface de pose (31a) de l'élément (30) de transfert de force,
l'angle (β₂) de la deuxième surface de pose (31b) de l'élément (30) de transfert de force
sont compris entre 7 et 20° (degrés angulaires).

9. Ensemble de fermeture rapide selon l'une des revendications 1 à 8, **caractérisé en ce que** l'élément (30) de transfert de force est formé de deux, trois ou plus de trois sections annulaires (35a, 35b; 36a, 36b, 36c) aptes à être assemblées en un anneau (35; 36) ou comme anneau ouvert (37).

10. Ensemble de fermeture rapide selon l'une des revendications 1 à 9, **caractérisé en ce que** l'élément de transfert de force a en section transversale la forme d'un trapèze, les deux surfaces de pose (31a, 31b) situées l'une face à l'autre formant les deux ailes du trapèze, le côté supérieur (32b) tourné vers la rainure (12) formant le court côté de base et le côté supérieur (32a) situé face au court côté de base formant le long côté de base.

11. Ensemble de fermeture rapide selon l'une des revendications 1 à 10, doté d'un ensemble d'actionnement permettant d'actionner l'ensemble (1) de liaison rapide, l'ensemble d'actionnement contenant un premier et un deuxième organe de guidage (43a, 43b) ainsi qu'un élément de fermeture (41) qui est placé sur l'un des corps de liaison (10, 20) de manière à pouvoir se déplacer, avec un coulisseau de guidage (42a, 42b) pour le premier et le deuxième organe de guidage (43a, 43b), les coulisseaux de guidage (42a, 42b) étant disposés dans un plan commun de guidage (E₂),
le premier organe de guidage (43a) étant raccordé à une première section d'extrémité (60a) de l'élément (30) de transfert de force et le deuxième organe de guidage (43b) à une deuxième section d'extrémité (60b) de l'élément (30) de transfert de force,
l'élément de fermeture (41) étant monté sur le corps de liaison de manière à pouvoir coulisser linéairement et parallèlement au plan de guidage (E₂) de telle sorte que les organes de guidage (43a, 43b) puissent être amenés dans le coulisseau de guidage (42a, 42b) depuis une position ouverte (O) dans laquelle l'élément (30) de transfert de force est rétracté dans la rainure (12) jusque dans une position de fermeture (S) dans laquelle l'élément (30) de transfert de force déborde radialement hors de la rainure et inversement.

12. Ensemble de fermeture rapide selon la revendication 11, **caractérisé par** un élément (44a, 44b) de guidage longitudinal disposé en même temps que l'élément de fermeture (41) sur l'un des corps de liaison (10, 20) et le long duquel l'élément de fermeture (41) peut coulisser linéairement dans une direction parallèle au plan de guidage (E₂).

13. Ensemble de fermeture rapide selon les revendications 11 ou 12, **caractérisé par** des positions d'extrémité (50, 51, 150, 151) du coulisseau de guidage (42a, 42b; 142a, 142b) qui définissent la position ouverte et la position fermée, avec une première position d'extrémité (51; 150) dans laquelle les deux organes de guidage (43a, 43b; 143a, 143b) présentent une distance minimale l'un par rapport à l'autre et une deuxième position d'extrémité (50; 151) dans laquelle les deux organes de guidage (43a, 43b; 143a, 143b) présentent une distance maximale l'un par rapport à l'autre.

14. Ensemble de fermeture rapide selon l'une des revendications 11 à 13, **caractérisé en ce que**
a. l'élément de fermeture (141) est disposé sur un élément de couvercle (115) du couvercle de fermeture (110) et les coulisseaux de guidage (142a, 142b) sont situés dans un plan de guidage (E₃) qui s'étend transversalement et en particulier perpendiculairement par rapport à l'axe de liaison (A) ou **en ce que**
b. l'élément de fermeture (41) est disposé à la périphérie extérieure d'une section de pourtour (11) du couvercle de fermeture (10) et les coulisseaux de guidage (42a, 42b) sont situés dans un plan de guidage (E₂) qui s'étend dans la même direction et en particulier parallèlement à l'axe de liaison (A).

15. Elément de transfert de force destiné à être utilisé dans un ensemble de fermeture rapide (1) selon l'une des revendications 1 à 10, l'élément de transfert de force étant formé de deux, trois ou plus que trois sections annulaires (35a, 35b; 36a, 36b, 36c) élastiques aptes à être assemblées par un anneau (35; 36) ou comme anneau élastique ouvert (37), **caractérisé en ce que**
l'élément (30) de transfert de force a en section transversale la forme d'un trapèze avec:
- un premier côté de base court formant le côté extérieur et définissant un premier côté supérieur (32b),
- un deuxième côté de base long, formant le côté intérieur, qui définit le deuxième côté supérieur (32a) et s'étend de préférence parallèlement au premier côté de base,
- une première aile de trapèze qui définit la première surface de pose (31a),
- une deuxième aile de trapèze qui définit une deuxième surface de pose (32),
les deux ailes du trapèze reliant l'un à l'autre les deux côtés de base et les ailes du trapèze formant avec le deuxième côté supérieur un angle inférieur à 90°.
